# EUROPEAN PATENT SPECIFICATION

(11) **EP 2 423 001 B1**
(45) Date of publication and mention of the grant of the patent: **14.05.2014**
(21) Application number: 11178386.6
(22) Date of filing: 23.08.2011
(51) Int. Cl.: B60C 9/04

(54) **Pneumatic tire**
Luftreifen
Pneu

(30) Priority: 23.08.2010 US 861002
(43) Date of publication of application: 29.02.2012
(73) Proprietor: The Goodyear Tire & Rubber Company, Akron, OH 44316-0001 (US)
(72) Inventor: Arnold, John Eric, North Canton, OH Ohio 44720 (US)
(74) Representative: Kutsch, Bernd

(56) References cited:
- EP-A1- 0 172 294
- EP-A2- 0 396 494
- GB-A- 2 017 016
- JP-A- 4 129 803

## Description

### Field of the Invention

The present invention relates to a pneumatic tire, and more particularly, to a pneumatic aircraft or truck tire with a barrier layer.

### Background of the Invention

The carcass reinforcements of conventional aircraft tires generally comprise several plies of textile cords, which are typically anchored in each bead to at least one single wire bead core. These reinforcements are wound around the bead wire from the inside to the outside, forming turn-ups, the respective ends of which are spaced radially from the axis of rotation of the tire. The severe conditions under which aircraft tires are used are such that the life of the beads is short, particularly in the area of the turn-ups of the carcass reinforcement.

An improvement in performance may be obtained by the separating of the plies of the carcass reinforcement into two groups. The first group may comprise the plies of the carcass reinforcement which are axially inward of the beads, these plies being then wound around a bead wire in each bead from the inside to the outside of the tire. The second group may be formed of at least one axially outer ply in the region of the beads, which ply is generally wound around the bead wire from the outside to the inside of the tire.

The endurance of these beads thus may be improved by the presence within each bead of an additional reinforcement ply wound around the bead wire and thus forming an axially outer strand and an axially inner strand, the reinforcement ply being the ply closest to the filling or infill rubber profiled element, which is generally triangular and radially above the anchoring bead wire.

The endurance of the beads of aircraft tires are subjected to large loads which may impart thereto deflections of the order of 50% of their height and more. The large number of carcass plies also creates a large number of free ends of the reinforcement elements and interfaces between plies leading to greater hysteresis losses and therefore higher operating temperatures, all of which are factors contributing to fatigue failure and shorter operational life of the beads and the tires.

One conventional aircraft tire has a tread, a crown reinforcement, and a radial carcass reinforcement. The radial carcass reinforcement comprises a plurality of textile reinforcement elements oriented substantially radially (that is to say forming an angle of between 80° and 100° relative to the circumferential direction). The radial reinforcement elements of the carcass reinforcement of this tire are composite cables formed by plying at least one yarn having a modulus of elasticity in tension at least equal to 2000 cN/tex, with at least one yarn having a modulus of elasticity upon traction at most equal to 1500 cN/tex. The moduli of these yarns is measured for a tensile force equal to ten percent (10%) of the breaking load of each yarn. Similarly the crown reinforcement may use these composite cables.

Conventional pneumatic aircraft tires are a composite of at least two primary materials: elastomer and fibers. The materials are combined to produce rubberized fibers used as reinforcement in the tire. Common fibers are polyester, rayon, nylon, aromatic polyamide, and aramid, all of which are formed into cords prior to being incorporated into elastomers. The rubberized fibers give a tire its shape, size, stability, load carrying capacity, fatigue, bruise resistance, etc.

Fiber cords are used in all the different areas of the tire where reinforcement means are required: in the carcass as a reinforcing ply for the entire carcass or in sidewall regions; in the belt or breaker structures as primary reinforcing plies or as overlays or underlays; in the bead region as flipper or chipper plies. In the different areas of the tire, the fiber cord is relied upon to provide properties specific to that region of the tire. Thus, for each area of the tire, a single type of fiber may be treated or corded in numerous ways to provide different benefits.

In selecting a fiber cord for reinforcing a tire, the cord properties are selected to achieve desired goals. When different properties are desired and a single fiber type cannot provide the desired characteristics to the tire, different materials may be combined. A reinforcement ply may use alternating types of parallel cords.

Core/sheath types of filaments are also known, see US-A- 5,221,384.

US-A- 2005/10133137 is directed to a blended fiber cord used for reinforcing tires and pneumatic tires comprising such cords. The cords, in combination with a preferred adhesive, achieved a high degree of thermal stability allowed for the use of such cords in various reinforcing plies for a pneumatic tire and for preferred use for such cords in areas of the tire subjected to high temperatures either in curing or performance.

JP-A- 04129803 describes a pneumatic tire for a heavy load comprising a steel carcass ply wrapped around the bead cores and split textile carcass plies radially inwardly of the steel ply also extending about the bead cores.

GB-A 2 017 016 describes a pneumatic tire having a carcass ply extending from bead to bead but not wrapping around the bead cores and a split carcass ply extending from the tire shoulders respectively and wrapping around the bead cores.

EP-A- 0 172 294 describes a pneumatic tire comprising a liner extending between the tire beads. A reinforcement ply and a barrier ply are provided extending between the beads and a circumferentially inextensible belt assembly.

EP-A- 0 396 494 describes a radial ply aircraft tire comprising several turn-up and turn-down carcass plies as well as strips reinforced by nylon cords interposed between the turn-up and turn-down plies near the bead cores.

### Summary of the invention

The invention relates to a tire in accordance with claim 1.

Dependent claims refer to preferred embodiments of the invention.

The pneumatic tire preferably includes a tread, a crown reinforcement radially inward of the tread, a pair of bead cores, a carcass structure radially inward of the crown reinforcement and wound around the bead cores, an innerliner radially inward of the carcass structure, and a barrier layer interposed between the carcass structure and the innerliner. The barrier layer includes two fabric pieces one on each side of a center line of the pneumatic tire. One end of each fabric piece is located near the centerline of the pneumatic tire. The other end of each fabric piece being wrapped around the bead cores and terminating at least at the radial outermost part of the bead cores.

### Definitions

The following definitions are controlling for the disclosed invention.

"Apex" means an elastomeric filler located radially above the bead core and between the plies and the turnup ply.

"Axial" and "axially" are used herein to refer to lines or directions that are parallel to the axis of rotation of the tire.

"Bead" means that part of the tire comprising an annular tensile member wrapped by ply cords and shaped, with or without other reinforcement elements such as flippers, chippers, apexes, toe guards and chafers, to fit the design rim.

"Belt structure" means one or at least two annular layers or plies of parallel cords, woven or unwoven, underlying the tread, preferably unanchored to the bead, and having cords preferably inclined respect to the equatorial plane of the tire. The belt structure may also include plies of parallel cords inclined at relatively low angles, acting as restricting layers.

"Carcass" means the tire structure apart from the belt structure, tread, undertread, and sidewall rubber over the plies, but including the beads.

"Chipper" refers to a narrow band of fabric or metal cords located in the bead area whose function is to reinforce the bead area and stabilize the radially inwardmost part of the sidewall.

"Circumferential" means lines or directions extending along the perimeter of the surface of the annular tire parallel to the Equatorial Plane (EP) and perpendicular to the axial direction; it can also refer to the direction of the sets of adjacent circular curves whose radii define the axial curvature of the tread, as viewed in cross section.

"Cord" means one of the reinforcement strands which the reinforcement structures of the tire comprise.

"Cord angle" means the acute angle, left or right in a plan view of the tire, formed by a cord with respect to the equatorial plane. The "cord angle" is measured in a cured but uninflated tire.

"Crown" means that portion of the tire within the width limits of the tire tread.

"Denier" means the weight in grams per 9000 meters (unit for expressing linear density). Dtex means the weight in grams per 10,000 meters.

"Equatorial plane (EP)" means the plane perpendicular to the tire's axis of rotation and passing through the center of its tread; or the plane containing the circumferential centerline of the tread.

"Fabric" means a network of essentially unidirectionally extending cords, which may be twisted, and which in turn are composed of a plurality of a multiplicity of filaments (which may also be twisted) of a preferably high modulus material.

"Flipper" refers to a reinforcing fabric around the bead wire for strength and to tie the bead wire in the tire body.

"Inner" means toward the inside of the tire and "outer" means toward its exterior.

"Innerliner" means the layer or layers of elastomer or other material that form the inside surface of a tubeless tire and that contain the inflating fluid within the tire.

"Ply" means a cord-reinforced layer of rubber-coated radially deployed or otherwise parallel cords.

"Radial" and "radially" are used to mean directions radially toward or away from the axis of rotation of the tire.

"Section Height" means the radial distance from the nominal rim diameter to the outer diameter of the tire at its equatorial plane.

"Section Width" means the maximum linear distance parallel to the axis of the tire and between the exterior of its sidewalls when and after it has been inflated at normal pressure for 24 hours, but unloaded, excluding elevations of the sidewalls due to labeling, decoration or protective bands.

"Sidewall" means that portion of a tire between the tread and the bead.

"Tread" means a molded rubber component which, when bonded to a tire casing, includes that portion of the tire that comes into contact with the road when the tire is normally inflated and under normal load.

### Brief Description of the Drawings

The invention will be described by way of example and with reference to the accompanying drawings in which:
FIG. 1 is a cross sectional view of an example pneumatic tire in accordance with the present invention.
FIG. 2 is a cross sectional view of the bead area of the example tire of FIG. 1.
FIG. 3 is an additional view of the bead area of FIG. 2.

### Detailed Description of an Example Embodiment the Present Invention

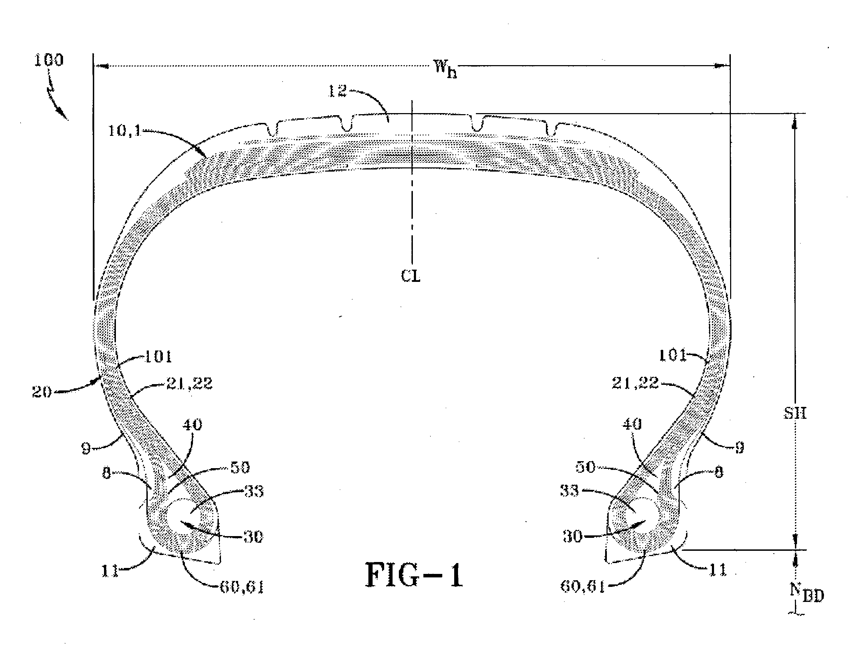

FIG. 1 illustrates an exemplary pneumatic aircraft tire 100 in accordance with the present invention. The example tire 100 has a tread 12 with sidewall portions 9 connected to, and extending from, lateral edges of the tread 12. At radially inner ends of each sidewall 9 is a bead portion 30. Each bead portion 30 has therein a bead core 33, an apex 40 extending radially outward from the bead core 33, and may have at least one reinforcing chafer layer 60 reinforced with cords 61 to reduce rim chafing of the pneumatic tire 100. A carcass reinforcing ply structure 20 extends from one bead portion 30 to the opposing bead portion with turnup portions.

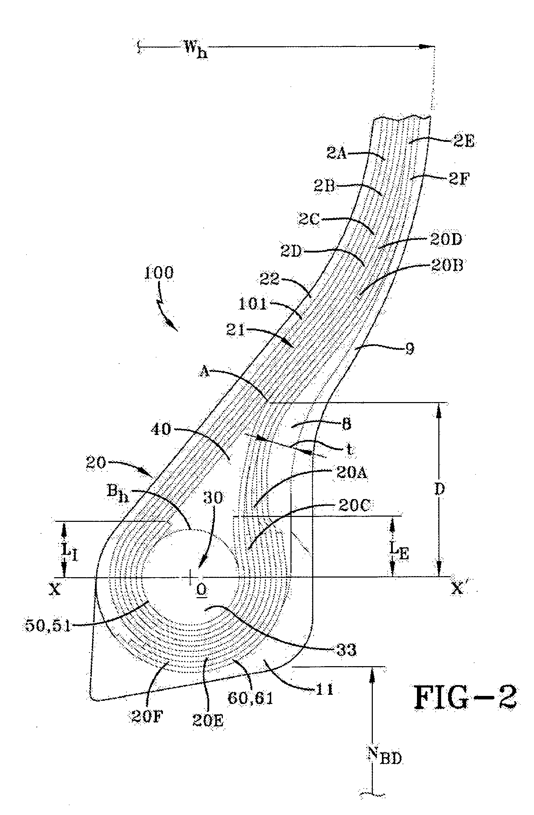

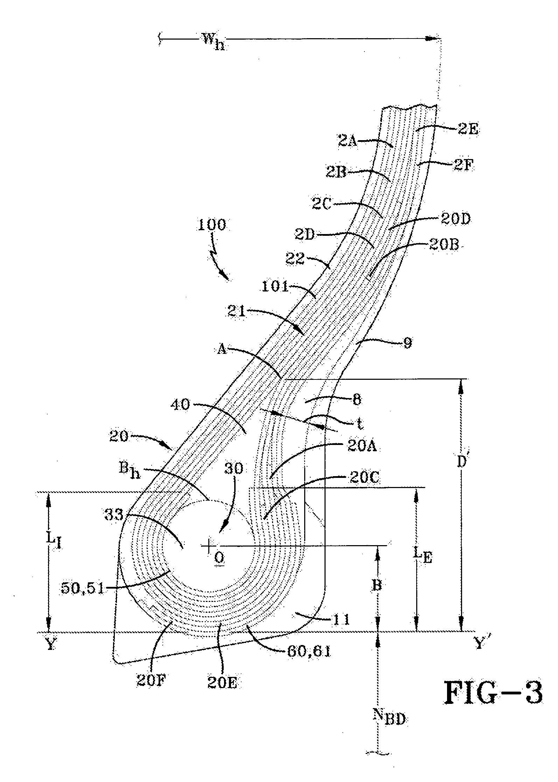

With reference to FIGS. 2 and 3, the carcass structure 20 is formed of preferably six plies 2A to 2F of radial textile cords 21. Among these six plies, preferably four axially inner plies 2A, 2B, 2C and 2D are wound about each circular bead core 33. These four plies extend from the inside to the outside of the example tire 100 in order to form turn-ups 20A, 20B, 20C and 20D. The carcass structure 20 is disposed radially outward of an air-impermeable innerliner 22 of example tire 100.

Outward of the bead cores 33 is the strip or filler apex 40 of elastomeric material having a substantially triangular shape extending to a terminal end A radially farthest from the axis of rotation of the tire 100 and located a distance D from a reference line XX'. As was shown in FIG. 1 the reference line XX' is also parallel to the axis of rotation of the tire 100 and extends through the geometric center O of the cross section of each bead core 33.

A flipper 50, which may be formed of textile cords 51 similar to those of the cords 21 of the carcass structure 20, is located with an inner end L_{I} slightly above the radially outer height Bₕ of the bead core 33 and an outer end L_{E} is also shown slightly above the bead core 33, as measured from reference line YY'. The ends L_{I}, L_{E} may satisfy a relationship wherein Bₕ < L_{I} and L_{E} < 0.7 D as measured from the nominal bead diameter N_{BD}. To minimize the space occupied by the flipper 50, the cords 51 may be made of a diameter smaller than the ply cords 21.

The carcass structure 20 further has preferably two carcass plies 2E, 2F, hereinafter called outer plies. These outer plies 2E, 2F cover the turn-ups 20A - 20D of the inner plies 2A - 2D. The outer plies 2E, 2F are wound around each bead core 33 over a portion of a circular arc at least axially inward of the cross-sectional center of each bead core 33. The ply ends 20E, 20F are thus axially (or laterally) inward of the lowest portion of the bead core 33. The ply ends 20E, 20F are thus effectively pinched between each bead core 33 and a rim seat, thereby helping to securely anchor these outer plies 2E, 2F.

The bead area 30 may have an outer chipper 60 of textile cords 61 wrapped around the ply ends 20E, 20F, protecting the carcass plies 2A - 2F against damage during mounting. Typically, radially below the chipper 60 may be a chafer 11 having a rubber gauge in the range of 1.0 mm to 4.1 mm.

Axially outward of the chafer 11 and the plies 20E, 20F may be an elongated strip 8 of elastomeric material extending from radially inward of the bead core 33 adjacent the chafer to a radial location at or slightly above the turn-up 20B, but below the turn-up 20D. This strip 8 may be interposed between the sidewall rubber 9 and the outer ply 20F. At a location almost equal to the radial height D of the terminal end A, the strip 8 may have a maximum thickness t. In this example, the maximum thickness t is 7.6 mm.

Outward of the carcass structure 20 is a belt structure 10 (FIG. 1). The belt structure 10 has at least two ply layers of cords 1, the cords being inclined at an angle of preferably between 5 and 35 degrees. The cords 1 in each ply layer are parallel to each other and crossed relative to the cords in the adjacent layer.

In accordance with the present invention, a barrier layer 101 of low denier, high end count fabric is placed between the innermost ply 2A and the innerliner 22 for preventing migration of the innerliner compound into the ply compound and to further increase strength to the tire casing. This barrier layer 101 may consist of two fabric pieces - one on each side of the centerline CL of the tire 100. In cross section (FIG. 1), one end of each fabric piece may be located near the centerline CL of the tire 100 in the crown portion of the tire. These ends may be disposed between 1/6 and 1/4 of the section width Wₕ of the tire from the centerline CL.

The opposite ends of the pieces of the barrier layer 101 may wrap around the bead cores 33 and terminate at least at the top of the bead cores. The barrier layer 101 may be reinforced by low denier cords fabric, such as between 750 denier and 1000 denier, or particularly 842 denier. The barrier layer 101 may have an end count between 21 ends per inch (epi) and 35 epi. The cords may be nylon or other suitable material and at angles between 80 degrees and 90 degrees relative to the radial direction, or particularly 86 degrees.

As a green tire is shaped on a carcass drum into a belt package, a relatively low angle barrier fabric may provide isolation between the low-adhesion innerliner compound and the ply compound. This protection has traditionally been provided with a heavy layer of innerliner compound. The anchored fabric barrier layer 101 may allow the innerliner gage to be reduced, which may result in a lighter weight and less costly tire.

Radial aircraft tires, especially those with high blow-up ratios (mold OD/bead ID) may particularly benefit from such a barrier layer 101. Conventional bias ply aircraft tires employ a one-piece fabric barrier layer with ends terminating above the bead cores (with no wrap around). Since such a conventional layer is not anchored to the bead cores, the layer does not contribute fully to the strength of the tire casing, nor does this barrier layer help control the inflated section width Wₕ of the tire 100. The anchored barrier layer 101 of the present invention, however, adds strength to the tire casing, increases burst values, and assists in section width Wₕ control.

As stated above, a barrier layer 101 in accordance with the present invention produces excellent strength improvement and mitigates innerliner material migration. This barrier layer 101 thus enhances the performance of the tire 100, even though the complexities of the structure and behavior of the pneumatic tire are such that no complete and satisfactory theory has been propounded.

Carcass and innerliner characteristics affect the other components of a pneumatic tire (i.e., carcass and innerliner affect apex, belt, overlay, etc.), leading to a number of components interrelating and interacting in such a way as to affect a group of functional properties (noise, handling, durability, comfort, high speed, and mass), resulting in a complex composite. Changing even one component can lead to directly improving or degrading as many as the above ten functional characteristics, as well as altering the interaction between that one component and other structural components. Each of those interactions may improve or degrade the tire's functional characteristics. Since the barrier layer 101 is disposed between the carcass 21 and the innerliner 22, both the carcass and innerliner are altered.

## Claims

1. A pneumatic tire comprising a tread (12), a crown reinforcement (10) radially inward of the tread, a pair of bead cores (33), a carcass structure (20) radially inward of the crown reinforcement (10), an innerliner (22) radially inward of a radially innermost ply (2A) of the carcass structure (20), **characterised in that** a barrier layer (101) is interposed between the radially innermost ply (2A) of the carcass structure (20) and the innerliner (22), wherein the barrier layer (101) comprises at least two fabric pieces or fabric plies, one on each side of a center line (CL) of the pneumatic tire (100), wherein one end of each fabric piece or ply is wrapped around a respective bead core (33) and terminates at least at the radial outermost part of the bead cores or radially outwardly of the outermost part of the respective bead core (33), and wherein the barrier layer (101) is reinforced by fabric cords having between 750 denier and 1000 denier and an end count between 21 ends per 2.54 cm and 35 ends per 2.54 cm.

2. The tire of claim 1 wherein the carcass structure (20) is wound around the bead cores (33).

3. The tire of claim 1 or 2 wherein one end of each fabric piece or ply is located near the centerline (CL) of the pneumatic tire (100).

4. The pneumatic tire as set forth in at least one of the previous claims wherein the other end of each fabric piece or ply is disposed between 1/12 and 1/3, alternatively between 1/6 and 1/4, of a section width (Wₕ) of the pneumatic tire (100) from the centerline (CL).

5. The pneumatic tire as set forth in at least one of the previous claims wherein the other end of each fabric piece or ply is disposed between 1/8 and 1/6 a section width (Wₕ) of the pneumatic tire (100) from the centerline (CL).

6. The pneumatic tire as set forth in at least one of the previous claims wherein the two other ends of the fabric pieces or plies are disposed at a distance in a range of from between 1/8 and 1/2, alternatively of from between 1/6 and 1/3, of a section width (Wₕ) of the pneumatic tire (100) from the centerline (CL).

7. The pneumatic tire as set forth in at least one of the previous claims wherein the barrier layer (101) is designed such that it prevents migration of the innerliner compound into the carcass structure compound.

8. The pneumatic tire as set forth in at least one of the previous claims wherein the barrier layer (101) is reinforced by fabric cords of 842 denier.

9. The pneumatic tire as set forth in at least one of the previous claims wherein the barrier layer (101) has an end count between 24 ends per 2.54 cm and 30 ends per 2.54 cm.

10. The pneumatic tire as set forth in at least one of the previous claims wherein the barrier layer (101) is reinforced by nylon cords.

11. The pneumatic tire as set forth in at least one of the previous claims wherein the barrier layer (101) is reinforced by cords at angles between 80 degrees and 90 degrees, alternatively 86 degree, relative to a radial direction of the pneumatic tire (100).

12. The pneumatic tire as set forth in at least one of the previous claims wherein the one end of each fabric piece or ply which is wrapped around a respective bead core (33) terminates radially outwardly of the outermost part of the respective bead core (33).

13. The pneumatic tire as set forth in claim 12 wherein the one end of each fabric piece or ply which is wrapped around a respective bead core (33) terminates radially in a range of from 2% to 15%, alternatively 2% to 10%, of the section height (SH) of the tire (100) outwardly of the outermost part of the respective bead core (33).

14. The pneumatic tire as set forth in at least one of the previous claims wherein the tire is an aircraft tire.

15. The pneumatic tire as set forth in at least one of the previous claims wherein the tire is a radial truck tire.

## Patentansprüche

1. Luftreifen, umfassend eine Lauffläche (12), eine Zenitverstärkung (10) radial einwärts von der Lauffläche, ein Paar Wulstkerne (33), eine Karkassenstruktur (20) radial einwärts von der Zenitverstärkung (10), eine Innenisolierung (22) radial einwärts von einer radial innersten Lage (2A) der Karkassenstruktur (20), **dadurch gekennzeichnet, dass** eine Barriereschicht (101) zwischen der radial innersten Lage (2A) der Karkassenstruktur (20) und der Innenisolierung (22) angeordnet ist, wobei die Barriereschicht (101) mindestens zwei Gewebestücke oder Gewebelagen umfasst, eine an jeder Seite einer Mittellinie (CL) des Luftreifens (100), wobei ein Ende jedes Gewebestücks oder Gewebelage um einen jeweiligen Wulstkern (33) herumgeschlagen ist und mindestens an dem radial äußersten Teil der Wulstkerne oder radial auswärts von dem äußersten Teil des betreffenden Wulstkerns (33) endet, und wobei die Barriereschicht (101) durch Gewebekorde verstärkt ist, die zwischen 750 Denier und 1000 Denier und eine Endenzahl zwischen 21 Enden je 2,54 cm und 35 Enden je 2,54 cm aufweisen.

2. Reifen nach Anspruch 1, wobei die Karkassenstruktur (20) um die Wulstkerne (33) herumgewickelt ist.

3. Reifen nach Anspruch 1 oder 2, wobei ein Ende jedes Gewebestücks oder Gewebelage sich nächst der Mittellinie (CL) des Luftreifens (100) befindet.

4. Reifen, wie in mindestens einem der vorgenannten Ansprüche dargelegt, wobei das andere Ende jedes Gewebestücks oder Gewebelage zwischen 1/12 und 1/3, alternativ zwischen 1/6 und 1/4, einer Querschnittsbreite (Wₕ) des Luftreifens (100) von der Mittellinie (CL) angeordnet ist.

5. Reifen, wie in mindestens einem der vorgenannten Ansprüche dargelegt, wobei das andere Ende jedes Gewebestücks oder Gewebelage zwischen 1/8 und 1/6 einer Querschnittsbreite (Wₕ) des Luftreifens (100) von der Mittellinie (CL) angeordnet ist.

6. Reifen, wie in mindestens einem der vorgenannten Ansprüche dargelegt, wobei die zwei anderen Enden der Gewebestücke oder Gewebelagen in einem Abstand in einem Bereich von zwischen 1/8 und 1/2, alternativ von zwischen 1/6 und 1/3, einer Querschnittsbreite (Wₕ) des Luftreifens (100) von der Mittellinie (CL) angeordnet sind.

7. Reifen, wie in mindestens einem der vorgenannten Ansprüche dargelegt, wobei die Barriereschicht (101) so gestaltet ist, dass sie Migration der Innenisolierungsmischung in die Karkassenstrukturmischung verhindert.

8. Reifen, wie in mindestens einem der vorgenannten Ansprüche dargelegt, wobei die Barriereschicht (101) durch Gewebekorde von 842 Denier verstärkt ist.

9. Reifen, wie in mindestens einem der vorgenannten Ansprüche dargelegt, wobei die Barriereschicht (101) eine Endenzahl zwischen 24 Enden je 2,54 cm und 30 Enden je 2,54 cm aufweist.

10. Reifen, wie in mindestens einem der vorgenannten Ansprüche dargelegt, wobei die Barriereschicht (101) durch Nylonkorde verstärkt ist.

11. Reifen, wie in mindestens einem der vorgenannten Ansprüche dargelegt, wobei die Barriereschicht (101) durch Korde unter Winkeln zwischen 80 Grad und 90 Grad, alternativ 86 Grad, bezüglich einer radialen Richtung des Luftreifens (100) verstärkt ist.

12. Reifen, wie in mindestens einem der vorgenannten Ansprüche dargelegt, wobei das eine Ende jedes Gewebestücks oder Gewebelage, das um einen jeweiligen Wulstkern (33) herumgeschlagen ist, radial auswärts von dem äußersten Teil des betreffenden Wulstkerns (33) endet.

13. Luftreifen, wie in Anspruch 12 dargelegt, wobei das eine Ende jedes Gewebestücks oder Gewebelage, das um einen jeweiligen Wulstkern (33) herumgeschlagen ist, radial in einem Bereich von 2% bis 15%, alternativ 2% bis 10%, der Querschnittshöhe (SH) des Reifens (100) auswärts von dem äußersten Teil des betreffenden Wulstkerns (33) endet.

14. Reifen, wie in mindestens einem der vorgenannten Ansprüche dargelegt, wobei der Reifen ein Flugzeugreifen ist.

15. Reifen, wie in mindestens einem der vorgenannten Ansprüche dargelegt, wobei der Reifen ein Lastkraftwagen-Radialreifen ist.

## Revendications

1. Bandage pneumatique comprenant une bande de roulement (12), un renforcement de sommet (10) à l'intérieur de la bande de roulement en direction radiale, une paire de tringles de talons (33), une structure de carcasse (20) à l'intérieur du renforcement de sommet (10) en direction radiale, un calandrage intérieur (22) à l'intérieur en direction radiale de la nappe la plus interne en direction radiale (2A) de la structure de carcasse (20), **caractérisé en ce qu'**une couche d'arrêt (101) est intercalée entre la nappe la plus interne en direction radiale (2A) de la structure de carcasse (20) et le calandrage intérieur (22), dans lequel la couche d'arrêt (120) comprend au moins deux morceaux de tissu ou deux nappes de tissu, une de chaque côté de la ligne médiane (CL) du bandage pneumatique (100), dans lequel chaque extrémité de chaque morceau de tissu ou de nappe de tissu vient s'enrouler autour d'une tringle de talon respective (33) et se termine au moins à l'endroit le plus externe en direction radiale des tringles de talons ou le plus externe en direction radiale de l'endroit le plus à l'extérieur de la tringle de talon respective (33), et dans lequel la couche d'arrêt (101) est renforcée par des câblés en tissu possédant une masse entre 750 deniers et 1000 deniers et un nombre de bouts entre 21 bouts par 2,54 cm et 35 bouts par 2,54 cm.

2. Bandage pneumatique selon la revendication 1, dans lequel la structure de carcasse (20) vient s'enrouler autour des tringles de talons (33).

3. Bandage pneumatique selon la revendication 1 ou 2, dans lequel une extrémité de chaque morceau ou de chaque nappe de tissu est disposée à proximité de la ligne médiane (CL) du bandage pneumatique (100).

4. Bandage pneumatique selon au moins une des revendications précédentes, dans lequel l'autre extrémité de chaque morceau de chaque nappe de tissu est disposée à un endroit correspondant à une valeur entre 1/12 et 1/3, en variante entre 1/6 et 1/4 de la largeur de section (Wₕ) du bandage pneumatique (100) par rapport à la ligne médiane (CL).

5. Bandage pneumatique selon au moins une des revendications précédentes, dans lequel l'autre extrémité de chaque morceau de chaque nappe de tissu est disposée à un endroit correspondant à une valeur entre 1/8 et 1/6 de la largeur de section (Wₕ) du bandage pneumatique (100) par rapport à la ligne médiane (CL).

6. Bandage pneumatique selon au moins une des revendications précédentes, dans lequel les deux autres extrémités des morceaux ou des nappes de tissu viennent se disposer à une distance correspondant à une valeur dans la plage de 1/8 à 1/2, en variante de 1/6 et 1/3 de la largeur de section (Wₕ) du bandage pneumatique (100) par rapport à la ligne médiane (CL).

7. Bandage pneumatique selon au moins une des revendications précédentes, dans lequel la couche d'arrêt (101) est conçue de façon à empêcher la migration du composé faisant office de calandrage intérieur dans le composé faisant office de structure de carcasse.

8. Bandage pneumatique selon au moins une des revendications précédentes, dans lequel la couche d'arrêt (101) est renforcée par des câblés en tissu de 842 deniers.

9. Bandage pneumatique selon au moins une des revendications précédentes, dans lequel la couche d'arrêt (101) possède un nombre de bouts entre 24 bouts par 2,54 cm et 30 bouts par 2,54 cm.

10. Bandage pneumatique selon au moins une des revendications précédentes, dans lequel la couche d'arrêt (101) est renforcée par des câblés en nylon.

11. Bandage pneumatique selon au moins une des revendications précédentes, dans lequel la couche d'arrêt (101) est renforcée par des câblés qui forment des angles entre 80° et 90°, en variante de 86° par rapport à la direction radiale du bandage pneumatique (100).

12. Bandage pneumatique selon au moins une des revendications précédentes, dans lequel la première extrémité de chaque morceau ou de chaque nappe de tissu qui vient s'enrouler autour d'une tringle de talon respective (33) se termine en direction radiale à l'extérieur de la partie la plus externe de la tringle de talon respective (33).

13. Bandage pneumatique selon la revendication 12, dans lequel la première extrémité de chaque morceau ou de chaque nappe de tissu qui vient s'enrouler autour d'une tringle de talon respective (33) se termine en direction radiale dans la plage de 2 % à 15 % en variante de 2 % à 10% de la hauteur de section (SH) du bandage pneumatique (100) à l'extérieur de la partie la plus externe de la tringle de talon respective (33).

14. Bandage pneumatique selon au moins une des revendications précédentes, dans lequel le bandage pneumatique est un bandage pneumatique pour aéroplane.

15. Bandage pneumatique selon au moins une des revendications précédentes, dans lequel le bandage pneumatique est un bandage pneumatique à nappe radiale pour camion.
